(19) **Europäisches Patentamt European Patent Office Office européen des brevets**

(11) **EP 4 564 449 A1**

(12) **EUROPEAN PATENT APPLICATION**
published in accordance with Art. 153(4) EPC

(43) Date of publication:
04.06.2025  Bulletin 2025/23

(21) Application number: 23909296.8

(22) Date of filing: 01.09.2023

(51) International Patent Classification (IPC):
*H01M 4/13* (2010.01)    *H01M 4/70* (2006.01)

(52) Cooperative Patent Classification (CPC):
H01M 4/13; H01M 4/70; H01M 10/04;
H01M 50/463; H01M 50/491; Y02E 60/10

(86) International application number:
PCT/CN2023/116626

(87) International publication number:
WO 2024/139358 (04.07.2024 Gazette 2024/27)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 26.12.2022  CN 202211678928

(71) Applicant: **Contemporary Amperex Technology Co., Limited**
**Ningde, Fujian 352100 (CN)**

(72) Inventors:
• **JIN, Haizu**
 **Ningde, Fujian 352100 (CN)**
• **LI, Ying**
 **Ningde, Fujian 352100 (CN)**
• **CHEN, Jiahua**
 **Ningde, Fujian 352100 (CN)**

(74) Representative: **Ran, Handong et al**
**Maucher Jenkins**
**Seventh Floor Offices**
**Artillery House**
**11-19 Artillery Row**
**London SW1P 1RT (GB)**

(54) **ELECTRODE ASSEMBLY, BATTERY AND ELECTRICAL APPARATUS**

(57)  An electrode assembly, a battery and an electrical apparatus. The electrode assembly comprises a positive electrode sheet, an isolation member and a negative electrode sheet, the isolation member being arranged between the positive electrode sheet and the negative electrode sheet, and a groove being formed in the surface of at least one of the positive electrode sheet, the negative electrode sheet and the isolation member.

FIG. 1

**Description**

**TECHNICAL FIELD**

This application relates to the field of secondary batteries, and specifically, to an electrode assembly, a battery, and an electric apparatus.

**BACKGROUND**

Secondary batteries have been widely used in various consumer electronic products and electric vehicles due to their prominent advantages such as light weight, no pollution, and no memory effect. However, after multiple cycles, the negative electrode plate undergoes volume swelling, which can easily cause battery capacity loss and safety issues.

**SUMMARY**

In view of the technical problems described in the background, this application provides an electrode assembly, aiming to solve the battery capacity loss and safety issues caused by volume swelling of the negative electrode plate during battery cycling.

To achieve the above purposes, a first aspect of this application provides an electrode assembly. The electrode assembly includes a positive electrode plate, a separation member, and a negative electrode plate, where the separation member is disposed between the positive electrode plate and the negative electrode plate, and at least one of the positive electrode plate, the negative electrode plate, and the separation member is provided with a groove on a surface.

Therefore, use of the electrode assembly of this application can solve the battery capacity loss and safety issues caused by volume swelling of the negative electrode plate during battery cycling.

In some embodiments of this application, a total volume $V_a$ of the groove and a total volume $V_{total}$ of the electrode assembly satisfy a relationship: $0.03 \leq \dfrac{V_a}{V_{tatol} - V_a} \leq 1.2$ . The groove satisfying such total volume can store a sufficient amount of electrolyte, which can reduce the occurrence of ion disconnection caused by the electrolyte in the electrode assembly being squeezed by volume swelling of the negative electrode plate, reducing the battery capacity loss.

In some embodiments of this application, the positive electrode plate includes a positive electrode current collector and a positive electrode active substance layer, where the positive electrode active substance layer is disposed on at least one side of the positive electrode current collector, and the positive electrode active substance layer is provided with a first groove on a surface; and/or the separation member is provided with a second groove on a surface; and/or the negative electrode plate includes a negative electrode current collector and a negative electrode active substance layer, where the negative electrode active substance layer is disposed on at least one side of the negative electrode current collector, and the negative electrode active substance layer is provided with a third groove on a surface. Thus, with the grooves disposed on the surface of the positive electrode plate and/or the negative electrode plate and/or the separation member, electrolyte retention can be implemented, reducing the occurrence of ion disconnection caused by the electrolyte in the electrode assembly being squeezed by volume swelling of the negative electrode plate.

In some embodiments of this application, the first groove is located in a region of 1/4 to 3/4 of a length of the positive electrode plate. Thus, with the groove disposed in the region of 1/4 to 3/4 of the length of the positive electrode plate, the occurrence of ion disconnection caused by the electrolyte in the electrode assembly being squeezed by volume swelling of the negative electrode plate can be reduced.

In some embodiments of this application, an area of a single first groove is $B_1$, where $300\ \mu m^2 \leq B_1 \leq 1\ cm^2$. Thus, with the first groove meeting such area disposed on the positive electrode active material layer of the positive electrode plate, the electrolyte retention effect can be improved, reducing the occurrence of ion disconnection caused by the electrolyte in the electrode assembly being squeezed by volume swelling of the negative electrode plate.

In some embodiments of this application, a depth of a single first groove is $H_1$, where $10\ \mu m \leq H_1 \leq 100\ \mu m$. Thus, with the first groove meeting such depth disposed on the positive electrode active material layer of the positive electrode plate, the electrolyte retention effect can be improved, reducing the occurrence of ion disconnection caused by the electrolyte in the electrode assembly being squeezed by volume swelling of the negative electrode plate.

In some embodiments of this application, a distance between two adjacent first grooves is $D_1$, where $0.5\ mm \leq D_1 \leq 10\ mm$. Thus, with the first groove meeting such distance disposed on the positive electrode active material layer of the positive electrode plate, the electrolyte retention effect can be improved, reducing the occurrence of ion disconnection caused by the electrolyte in the electrode assembly being squeezed by volume swelling of the negative electrode plate.

In some embodiments of this application, the second groove is located in a region of 1/4 to 3/4 of a length of the separation member. Thus, with the groove disposed in the region of 1/4 to 3/4 of the length of the separation member, the occurrence of ion disconnection caused by the electrolyte in the electrode assembly being squeezed by volume swelling of the negative electrode plate can be reduced.

In some embodiments of this application, an area of a single second groove is $B_2$, where $10 \ \mu m^2 \leq B_2 \leq 1000 \ \mu m^2$. Thus, with the second groove meeting such area disposed on the separation member, the electrolyte retention effect can be improved, reducing the occurrence of ion disconnection caused by the electrolyte in the electrode assembly being squeezed by volume swelling of the negative electrode plate.

In some embodiments of this application, a depth of a single second groove is $H_2$, where $1 \ \mu m \leq H_2 \leq 30 \ \mu m$. Thus, with the second groove meeting such depth disposed on the separation member, the electrolyte retention effect can be improved, reducing the occurrence of ion disconnection caused by the electrolyte in the electrode assembly being squeezed by volume swelling of the negative electrode plate.

In some embodiments of this application, a distance between two adjacent second grooves is $D_2$, where $5 \ \mu m \leq D_2 \leq 100 \ \mu m$. Thus, with the second groove meeting such distance disposed on the separation member, the electrolyte retention effect can be improved, reducing the occurrence of ion disconnection caused by the electrolyte in the electrode assembly being squeezed by volume swelling of the negative electrode plate.

In some embodiments of this application, the third groove is located in a region of 1/4 to 3/4 of a length of the negative electrode plate. Thus, with the groove disposed in the region of 1/4 to 3/4 of the length of the negative electrode plate, the occurrence of ion disconnection caused by the electrolyte in the electrode assembly being squeezed by volume swelling of the negative electrode plate can be reduced. Moreover, metal ions can deposit into the groove, reducing metal dendrites on the surface of the negative electrode plate and improving the battery safety performance.

In some embodiments of this application, an area of a single third groove is $B_3$, where $50 \ \mu m^2 \leq B_3 \leq 1 \ mm^2$. Thus, with the third groove meeting such area disposed on the negative electrode active material layer of the negative electrode plate, the occurrence of ion disconnection caused by the electrolyte in the electrode assembly being squeezed by volume swelling of the negative electrode plate can be reduced. Moreover, metal ions can deposit into the groove, reducing metal dendrites on the surface of the negative electrode plate and improving the battery safety performance.

In some embodiments of this application, a depth of a single third groove is $H_3$, where $1 \ \mu m \leq H_3 \leq 200 \ \mu m$. Thus, with the third groove meeting such depth disposed on the negative electrode active material layer of the negative electrode plate, the electrolyte retention effect can be improved, reducing the occurrence of ion disconnection caused by the electrolyte in the electrode assembly being squeezed by volume swelling of the negative electrode plate. Moreover, metal ions can deposit into the groove, reducing metal dendrites on the surface of the negative electrode plate and improving the battery safety performance.

In some embodiments of this application, a distance between two adjacent third grooves is $D_3$, where $0.5 \ mm \leq D_3 \leq 10 \ mm$. Thus, with the third groove meeting such distance disposed on the negative electrode active material layer of the negative electrode plate, the occurrence of ion disconnection caused by the electrolyte in the electrode assembly being squeezed by volume swelling of the negative electrode plate can be reduced. Moreover, metal ions can evenly deposit into the groove, reducing metal dendrites on the surface of the negative electrode plate and improving the battery safety performance.

In some embodiments of this application, a surface of at least one of the positive electrode plate, the separation member, and the negative electrode plate is arranged as a rough surface. Thus, with the surface of at least one of the positive electrode plate, the separation member, and the negative electrode plate arranged as a rough surface, the electrolyte retention effect of the electrode assembly can be improved, reducing the occurrence of ion disconnection caused by the electrolyte in the electrode assembly being squeezed by volume swelling of the negative electrode plate.

In some embodiments of this application, a roughness $R_1$ of the rough surface of the negative electrode plate satisfies Ra0.2 $\leq R_1 \leq$ Ra25; and/or a roughness $R_2$ of the rough surface of the positive electrode plate satisfies Ra0.1 $\leq R_2 \leq$ Ra50; and/or a roughness $R_3$ of the rough surface of the separation member satisfies $R_3 \geq$ Ra12.5. Thus, the electrolyte retention effect of the electrode assembly can be improved, reducing the occurrence of ion disconnection caused by the electrolyte in the electrode assembly being squeezed by volume swelling of the negative electrode plate.

In some embodiments of this application, an elastic modulus of the separation member is 200 MPa to 8000 MPa. Thus, when the negative electrode plate undergoes volume swelling, the battery swelling caused by the volume swelling of the negative electrode plate can be effectively mitigated, improving the battery safety performance.

In some embodiments of this application, the separation member includes a first separator, a middle separator, and a second separator stacked along a thickness direction of the separation member, and a thickness of the middle separator is not less than a thickness of the first separator or the second separator.

In some embodiments of this application, a pore size of the middle separator is larger than a pore size of the first separator or the second separator; and/or a porosity of the middle separator is larger than a porosity of the first separator or the second separator. Thus, the electrolyte retention effect of the separation member can be improved, reducing the occurrence of ion disconnection caused by the electrolyte in the electrode assembly being squeezed by volume swelling of the negative electrode plate.

In some embodiments of this application, the pore size of the first separator is 20 nm to 50 nm. This not only improves the electrolyte retention effect of the separation member, but also allows the separation member to have excellent ion conductivity.

In some embodiments of this application, the porosity of the first separator is 30% to 70%. Thus, the electrolyte retention effect of the separation member can be improved, reducing the occurrence of ion disconnection caused by the electrolyte in the electrode assembly being squeezed by volume swelling of the negative electrode plate.

In some embodiments of this application, the pore size of the middle separator is 30 nm to 100 nm. Thus, the electrolyte retention effect of the separation member can be improved, reducing the occurrence of ion disconnection caused by the electrolyte in the electrode assembly being squeezed by volume swelling of the negative electrode plate.

In some embodiments of this application, the porosity of the middle separator is 40% to 90%. Thus, the electrolyte retention effect of the separation member can be improved, reducing the occurrence of ion disconnection caused by the electrolyte in the electrode assembly being squeezed by volume swelling of the negative electrode plate.

In some embodiments of this application, the pore size of the second separator is 20 nm to 50 nm. This not only improves the electrolyte retention effect of the separation member, but also allows the separation member to have excellent ion conductivity.

In some embodiments of this application, the porosity of the second separator is 30% to 70%. Thus, the electrolyte retention effect of the separation member can be improved, reducing the occurrence of ion disconnection caused by the electrolyte in the electrode assembly being squeezed by volume swelling of the negative electrode plate.

In some embodiments of this application, the negative electrode plate includes a negative electrode current collector, and the negative electrode current collector is provided with a fourth groove on a surface. Thus, with the fourth groove disposed on the surface of the negative electrode current collector, the electrolyte retention effect can be improved, reducing the occurrence of ion disconnection caused by the electrolyte in the electrode assembly being squeezed by volume swelling of the negative electrode plate. Moreover, metal ions can evenly deposit into the groove, reducing the metal dendrites on the surface of the negative electrode plate and the volume swelling of the negative electrode plate, and improving the battery safety performance.

In some embodiments of this application, the fourth groove is located in a region of 1/4 to 3/4 of a length of the negative electrode current collector. Thus, with the groove disposed in the region of 1/4 to 3/4 of the length of the negative electrode current collector, the occurrence of ion disconnection caused by the electrolyte in the electrode assembly being squeezed by volume swelling of the negative electrode plate can be reduced. Moreover, metal ions can deposit into the groove, reducing the metal dendrites on the surface of the negative electrode plate and the volume swelling of the negative electrode plate, and improving the battery safety performance.

In some embodiments of this application, an area of a single fourth groove is $B_4$, where $70\ \mu m^2 \leq B_4 \leq 2\ mm^2$, preferably $300\ \mu m^2 \leq B_4 \leq 1\ mm^2$. Thus, with the fourth groove meeting such area disposed on the negative electrode current collector, the occurrence of ion disconnection caused by the electrolyte in the electrode assembly being squeezed by volume swelling of the negative electrode plate can be reduced. Moreover, metal ions can deposit into the groove, reducing the metal dendrites on the surface of the negative electrode plate and the volume swelling of the negative electrode plate, and improving the battery safety performance.

In some embodiments of this application, a depth of a single fourth groove is $H_4$, where $1\ \mu m \leq H_4 \leq 20\ \mu m$. Thus, with the fourth groove meeting such depth disposed on the negative electrode current collector, the occurrence of ion disconnection caused by the electrolyte in the electrode assembly being squeezed by volume swelling of the negative electrode plate can be reduced. Moreover, metal ions can deposit into the groove, reducing the metal dendrites on the surface of the negative electrode plate and the volume swelling of the negative electrode plate, and improving the battery safety performance.

In some embodiments of this application, a distance between two adjacent fourth grooves is $D_4$, where $0.01\ mm \leq D_4 \leq 10\ mm$, preferably $0.5\ mm \leq D_4 \leq 2\ mm$. Thus, with the fourth groove meeting such distance disposed on the negative electrode current collector, the occurrence of ion disconnection caused by the electrolyte in the electrode assembly being squeezed by volume swelling of the negative electrode plate can be reduced. Moreover, metal ions can deposit into the groove, reducing the metal dendrites on the surface of the negative electrode plate and the volume swelling of the negative electrode plate, and improving the battery safety performance.

In some embodiments of this application, the fourth groove extends through the negative electrode current collector. This can improve the electrolyte retention effect, reducing the occurrence of ion disconnection caused by the electrolyte in the electrode assembly being squeezed by volume swelling of the negative electrode plate. This also provides sufficient space for deposition of metal ions, reducing the metal dendrites on the surface of the negative electrode plate and the volume swelling of the negative electrode plate, and improving the battery safety performance.

In some embodiments of this application, the negative electrode current collector is provided with the fourth groove on both sides. This can improve the electrolyte retention effect, reducing the occurrence of ion disconnection caused by the electrolyte in the electrode assembly being squeezed by volume swelling of the negative electrode plate. This also provides sufficient space for deposition of metal ions, reducing the metal dendrites on the surface of the negative electrode plate and the volume swelling of the negative electrode plate, and improving the battery safety performance.

In some embodiments of this application, the fourth grooves on two sides of the negative electrode current collector are staggered. This can improve the electrolyte retention effect, reducing the occurrence of ion disconnection caused by the electrolyte in the electrode assembly being squeezed by volume swelling of the negative electrode plate. This also provides sufficient space for deposition of metal ions, reducing the metal dendrites on the surface of the negative electrode plate and the volume swelling of the negative electrode plate, and improving the battery safety performance.

In some embodiments of this application, a ratio of a depth of a single fourth groove to a thickness of the negative electrode current collector is 0.05 to 0.7, preferably 0.05 to 0.5, and more preferably 0.05 to 0.3. This allows for sufficient space for the electrolyte and metal dendrites while maintaining good strength of the negative electrode current collector.

In some embodiments of this application, the fourth grooves on two sides of the negative electrode current collector are arranged opposite each other. This can improve the electrolyte retention effect, reducing the occurrence of ion disconnection caused by the electrolyte in the electrode assembly being squeezed by volume swelling of the negative electrode plate. This also provides sufficient space for deposition of metal ions, reducing the metal dendrites on the surface of the negative electrode plate and the volume swelling of the negative electrode plate, and improving the battery safety performance.

In some embodiments of this application, the ratio of the depth of a single fourth groove to the thickness of the negative electrode current collector is 0.05 to 0.4. This allows for sufficient space for the electrolyte and metal dendrites while maintaining good strength of the negative electrode current collector.

In some embodiments of this application, a protrusion is formed on a surface of the negative electrode current collector. Thus, with the protrusion formed on the surface of the negative electrode current collector, the protrusion can provide larger electrolyte storage space for the negative electrode current collector, reducing the occurrence of ion disconnection caused by the electrolyte in the electrode assembly being squeezed by volume swelling of the negative electrode plate. Moreover, the protrusion can provide larger metal deposition space, reducing the metal dendrites on the surface of the negative electrode plate and the volume swelling of the negative electrode plate, and improving the battery safety performance.

In some embodiments of this application, the fourth groove is formed on one side of the negative electrode current collector, and the protrusion is formed at a position corresponding to the fourth groove on the other side of the negative electrode current collector. This can provide larger electrolyte storage space for the negative electrode current collector, reducing the occurrence of ion disconnection caused by the electrolyte in the electrode assembly being squeezed by volume swelling of the negative electrode plate. This can also provide larger metal deposition space, reducing the metal dendrites on the surface of the negative electrode plate and the volume swelling of the negative electrode plate, and improving the battery safety performance.

In some embodiments of this application, the negative electrode current collector is formed with the protrusion and the fourth groove on both sides, and the fourth groove and the protrusion are alternately arranged on the same side of the negative electrode current collector. This can provide larger electrolyte storage space for the negative electrode current collector, reducing the occurrence of ion disconnection caused by the electrolyte in the electrode assembly being squeezed by volume swelling of the negative electrode plate. This can also provide larger metal deposition space, reducing the metal dendrites on the surface of the negative electrode plate and the volume swelling of the negative electrode plate, and improving the battery safety performance.

In some embodiments of this application, the fourth groove on one side of the negative electrode current collector is arranged opposite the protrusion on the other side of the negative electrode current collector. This can provide larger electrolyte storage space for the negative electrode current collector, reducing the occurrence of ion disconnection caused by the electrolyte in the electrode assembly being squeezed by volume swelling of the negative electrode plate. This can also provide larger metal deposition space, reducing the metal dendrites on the surface of the negative electrode plate and the volume swelling of the negative electrode plate, and improving the battery safety performance.

In some embodiments of this application, a height of the protrusion is 1 $\mu$m to 20 $\mu$m. Thus, with the protrusion of such height formed on the surface of the negative electrode current collector, larger electrolyte storage space can be provided for the negative electrode current collector, reducing the occurrence of ion disconnection caused by the electrolyte in the electrode assembly being squeezed by volume swelling of the negative electrode plate. Moreover, larger metal deposition space can be provided, reducing the metal dendrites on the surface of the negative electrode plate and the volume swelling of the negative electrode plate, and improving the battery safety performance.

In some embodiments of this application, a coverage rate of the fourth groove on a single side of the negative electrode current collector is 10% to 70%. Thus, larger electrolyte storage space and metal deposition space can be provided for the negative electrode current collector, reducing battery capacity loss and improving battery safety performance.

In some embodiments of this application, when a tensile strain of the negative electrode current collector is 1.5%, a sheet resistance growth rate T of the negative electrode current collector is $\leq$5%, preferably T$\leq$2.5%. This can prevent an abrupt increase in resistance caused by tensile deformation of the negative electrode current collector, ensuring good conductivity and current collection performance of the negative electrode current collector. This in turn allows the electrochemical apparatus using the same to have low impedance and small negative electrode polarization, thereby allowing the electrochemical apparatus to have good electrochemical performances such as rate performance, cycling performance, and kinetic performance.

In some embodiments of this application, the fourth groove is provided with metallic dendrites. This can guide metal ions to deposit into the groove, reducing metal dendrites on the surface of the negative electrode plate and improving battery safety performance.

A second aspect of this application provides a battery including the electrode assembly according to the first aspect. Thus, during the charge and discharge cycles, the battery has the advantages of small capacity loss and high safety.

A third aspect of this application provides an electric device including the battery according to the second aspect, where the battery is configured to supply electric energy.

Additional aspects and advantages of this application will be given in part in the following description, part of which will become apparent from the following description or be learned from the practice of this application.

**BRIEF DESCRIPTION OF DRAWINGS**

Persons of ordinary skill in the art will be clear about various other advantages and benefits by reading the detailed description of the preferred embodiments below. The accompanying drawings are merely intended to illustrate the preferred embodiments and are not intended to limit this application. In addition, in all the accompanying drawings, the same reference signs represent the same components. In the accompanying drawings:

FIG. 1 is a schematic structural diagram of an electrode assembly according to an embodiment of this application;
FIG. 2 is a schematic structural diagram of a positive electrode plate according to an embodiment of this application;
FIG. 3 is a schematic structural diagram of a separator according to an embodiment of this application;
FIG. 4 is a schematic structural diagram of a separator according to another embodiment of this application;
FIG. 5 is a schematic structural diagram of a negative electrode plate according to an embodiment of this application;
FIG. 6 is a schematic structural diagram of a negative electrode current collector according to another embodiment of this application;
FIG. 7 is a schematic structural diagram of a negative electrode current collector according to still another embodiment of this application;
FIG. 8 is a schematic structural diagram of a negative electrode current collector according to still another embodiment of this application;
FIG. 9 is a schematic structural diagram of a negative electrode current collector according to still another embodiment of this application;
FIG. 10 is a schematic structural diagram of a negative electrode current collector according to still another embodiment of this application;
FIG. 11 is a schematic structural diagram of a negative electrode current collector according to still another embodiment of this application;
FIG. 12 is a schematic structural diagram of a battery according to an embodiment of this application;
FIG. 13 is a schematic structural diagram of a battery module according to an embodiment of this application;
FIG. 14 is a schematic structural diagram of a battery pack according to an embodiment of this application;
FIG. 15 is an exploded view of FIG. 14; and
FIG. 16 is a schematic diagram of an embodiment of an electric apparatus using a battery as a power source.

Description of reference signs:

1000: electrode assembly; 100: positive electrode plate; 11: positive electrode current collector; 12: positive electrode active material layer; 101: first groove; 200: separation member; 201: second groove; 21: first separator; 22: middle separator; 23: second separator; 300: negative electrode plate; 31: negative electrode current collector; 32: negative electrode active material layer; 301: third groove; 302: fourth groove; 303: protrusion;
1. secondary battery; 2. battery module; 3. battery pack; 4. upper box body; and 5. lower box body.

**DESCRIPTION OF EMBODIMENTS**

The following describes the embodiments of the technical solutions of this application in detail. The following embodiments are merely intended for a clearer description of the technical solutions of this application and therefore are merely used as examples but do not constitute any limitation on the protection scope of this application.

Reference to "embodiment" in the specification means that specific features, structures, or characteristics described with reference to the embodiment may be included in at least one embodiment of this application. The word "embodiment" appearing in various positions in the specification does not necessarily refer to the same embodiment or an independent or alternative embodiment that is exclusive of other embodiments. Persons skilled in the art explicitly and implicitly understand that the embodiments described herein may combine with another embodiment.

For brevity, this specification specifically discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each individually disclosed point or individual single numerical value may itself be a lower limit or an upper limit which can be combined with any other point or individual numerical value or combined with another lower limit or upper limit to form a range not expressly recorded.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates an "or" relationship between contextually associated objects.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions. In the descriptions of this application, "a plurality of" means at least two.

In recent years, new energy vehicles have developed by leaps and bounds, and in the field of electric vehicles, batteries play an irreplaceable and crucial role as power sources for the electric vehicles. As a core component of new energy vehicles, batteries have high requirements in terms of both safety and cycle life.

After multiple cycles, the existing batteries undergo significant volume swelling of the negative electrode plate. After this swelling force is transmitted to the separation member and the positive electrode plate, the separation member and the positive electrode plate are squeezed, which causes the electrolyte between the negative electrode plate and the separator and/or between the positive electrode plate and the separator to be extruded, resulting in ion disconnections and affecting the cycle life of the batteries.

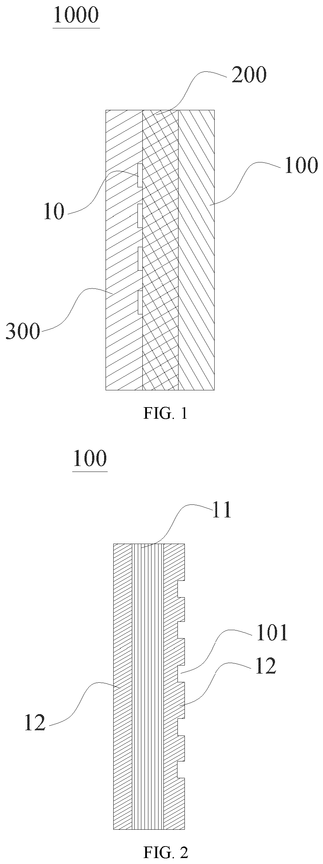

In view of this, to solve the problem of ion disconnection caused by the extrusion of electrolyte in the electrode assembly, a first aspect of this application provides an electrode assembly. For example, as shown in FIG. 1, the electrode assembly 1000 includes a positive electrode plate 100, a separation member 200, and a negative electrode plate 300, where the separation member 200 is disposed between the positive electrode plate 100 and the negative electrode plate 300, and at least one of the positive electrode plate 100, the negative electrode plate 300, and the separation member 200 is provided with a groove 10 on a surface.

It should be noted that the "surface" of at least one of the positive electrode plate 100, the negative electrode plate 300, and the separation member 200 refers to large surfaces on the positive electrode plate 100, the negative electrode plate 300, and the separation member 200, that is, the surfaces of the positive electrode plate 100, the separation member 200, and the negative electrode plate 300 along a thickness direction.

Compared to the prior art, arranging the groove 10 on the surface of at least one of the positive electrode plate 100, the negative electrode plate 300, and the separation member 200 can improve the electrolyte retention effect of the electrode assembly 1000, and reduce the occurrence of ion disconnection caused by the electrolyte in the electrode assembly 1000 being squeezed by the volume swelling of the negative electrode plate 300, thereby reducing the battery capacity loss and improving the cycle life of the battery.

When the electrode assembly 1000 of this application meets the above conditions, if it also optionally meets one or more of the following conditions, the battery capacity loss can be further reduced and the battery safety performance can be improved.

In some embodiments, a total volume $V_a$ of the groove 10 and a total volume $V_{total}$ of the electrode assembly 1000 satisfy a relationship: $0.03 \leq \dfrac{V_a}{V_{total} - V_a} \leq 1.2$, for example, 0.04-1.2, 0.05-1.2, 0.06-1.2, 0.07-1.2, 0.08-1.2, 0.09-1.2, 0.1-1.2, 0.15-1.2, 0.2-1.2, 0.25-1.2, 0.3-1.2, 0.35-1.2, 0.4-1.2, 0.45-1.2, 0.5-1.2, 0.55-1.2, 0.6-1.2, 0.65-1.2, 0.7-1.2, 0.75-1.2, 0.8-1.2, 0.85-1.2, 0.9-1.2, 0.95-1.2, 1-1.2, 1.05-1.2, 1.1-1.2, or 1.15-1.2. Thus, the groove meeting such total volume can store a sufficient amount of electrolyte, to reduce the occurrence of ion disconnection caused by the electrolyte in the electrode assembly 1000 being squeezed by the volume swelling of the negative electrode plate 300, reducing battery capacity loss and improving the cycle life of the battery.

In some embodiments, the groove 10 is disposed on the surface of the positive electrode plate 100. As shown in FIG. 2, the positive electrode plate 100 includes a positive electrode current collector 11 and a positive electrode active substance layer 12, where the positive electrode active substance layer 12 is disposed on at least one side of the positive electrode current collector 11, and the positive electrode active substance layer 12 is provided with a first groove 101 on a surface, preferably the positive electrode active substance layer 12 being provided with multiple first grooves 101 on the surface. Thus, with the first groove 101 disposed on the positive electrode active substance layer 12 of the positive electrode plate 100, the electrolyte retention effect of the positive electrode plate 100 can be improved, reducing the occurrence of ion disconnection caused by the electrolyte in the electrode assembly 1000 being squeezed by the volume swelling of the negative electrode plate 300, reducing the battery capacity loss, and improving the cycle life of the battery.

The positive electrode current collector 31 may be a common metal foil sheet or a composite current collector (the composite current collector may be made by providing a metal material on a polymer matrix). In an example, an aluminum foil may be used as the positive electrode current collector 31.

A specific type of the positive electrode active material in the positive electrode active material layer 12 is not limited, and any active material known in the art that can be used for the positive electrode of the battery can be used, and those skilled in the art can select an active material according to actual needs.

For example, when the battery is a lithium-ion battery, in an example, the positive electrode active material may include but is not limited to one or more of lithium transition metal oxide, olivine-structured lithium-containing phosphate, and modified compounds thereof. Examples of the lithium transition metal oxide may include but are not limited to one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the olivine-structured lithium-containing phosphate may include but are not limited to one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and modified compounds thereof. These materials are all commercially available.

For example, when the battery is a sodium-ion battery, in an example, the positive electrode active material may include but is not limited to at least one of layered transition metal oxide, polyanion compound, and Prussian blue analog.

Examples of the layered transition metal oxide may include, for example,

$Na_{1-x}Cu_hFe_kMn_lM^1{}_mO_{2-y}$, where $M^1$ is one or more of Li, Be, B, Mg, Al, K, Ca, Ti, Co, Ni, Zn, Ga, Sr, Y, Nb, Mo, In, Sn, and Ba, $0<x\leq0.33$, $0<h\leq0.24$, $0\leq k\leq0.32$, $0<l\leq0.68$, $0\leq m<0.1$, $h+k+l+m=1$, and $0\leq y<0.2$;

$Na_{0.67}Mn_{0.7}Ni_zM^2{}_{0.3-z}O_2$, where $M^2$ is one or more of Li, Mg, Al, Ca, Ti, Fe, Cu, Zn, and Ba, and $0<z\leq0.1$; and

$Na_aLi_bNi_cMn_dFe_eO_2$, where $0.67<a\leq1$, $0<b<0.2$, $0<c<0.3$, $0.67<d+e<0.8$, and $b+c+d+e=1$.

Examples of the polyanion compound may include, for example,

$A^1{}_fM^3{}_g(PO_4)_iO_jX^1{}_{3-j}$, where A is one or more of H, Li, Na, K, and $NH_4$, $M^3$ is one or more of Ti, Cr, Mn, Fe, Co, Ni, V, Cu, and Zn, $X^1$ is one or more of F, Cl, and Br, $0<f\leq4$, $0<g\leq2$, $1\leq i\leq3$, and $0\leq j\leq2$;

$Na_nM^4PO_4X^2$, where $M^4$ is one or more of Mn, Fe, Co, Ni, Cu, and Zn, $X2$ is one or more of F, Cl, and Br, and $0<n\leq2$;

$Na_pM^5{}_q(SO_4)_3$, where $M^5$ is one or more of Mn, Fe, Co, Ni, Cu, and Zn, $0<p\leq2$, and $0<q\leq2$; and

$Na_sMn_tFe_{3-t}(PO_4)_2(P_2O_7)$, where $0<s\leq4$, and $0\leq t\leq3$, for example, t is 0, 1, 1.5, 2, or 3.

Examples of the Prussian blue analog may include, for example,

$A_uM^6{}_v[M^7(CN)_6]_w\cdot xH_2O$, where A is one or more of $H^+$, $NH^{4+}$, alkali metal cation, and alkaline-earth metal cation, $M^6$ and $M^7$ are each independently one or more of transition metal cations, $0<u\leq2$, $0<v\leq1$, $0<w\leq1$, and $0<x<6$. For example, A is one or more of $H^+$, $Li^+$, $Na^+$, $K^+$, $NH_4{}^+$, $Rb^+$, $Cs^+$, $Fr^+$, $Be^{2+}$, $Mg^{2+}$, $Ca^{2+}$, $Sr^{2+}$, $Ba^{2+}$, and $Ra^{2+}$, and $M^6$ and $M^7$ are each independently a cation of one or more transition metal elements selected from Ti, V, Cr, Mn, Fe, Co, Ni, Cu, Zn, Sn, and W.

The modified compounds of the foregoing materials may be obtained through doping modification and/or surface coating modification to the materials.

The positive electrode active material layer 12 usually further optionally includes a binder, a conductive agent, and other optional adjuvants.

In an example, the conductive agent may be one or more of superconducting carbon, acetylene black, carbon black, Ketjen black, carbon dots, carbon nanotubes, Super P (SP), graphene, and carbon nanofibers.

In an example, the binder may be one or more of styrene-butadiene rubber (SBR), water-based acrylic resin (water-based acrylic resin), polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

In some embodiments, the first groove 101 is located in a region of 1/4 to 3/4, such as a region of 3/8 to 5/8, of a length of the positive electrode plate 100. Thus, with the first groove 101 disposed in such region of the positive electrode plate 100, the occurrence of ion disconnection caused by the electrolyte in the electrode assembly 1000 being squeezed by volume swelling of the negative electrode plate 300 can be reduced.

In some embodiments, an area of a single first groove 101 is $B_1$, where 300 $\mu m^2 \leq B_1 \leq 1$ cm$^2$, for example, 500 $\mu m^2 \leq B_1 \leq 1$ cm$^2$, 800 $\mu m^2 \leq B_1 \leq 1$ cm$^2$, 1000 $\mu m^2 \leq B_1 \leq 1$ cm$^2$, 1500 $\mu m^2 \leq B_1 \leq 1$ cm$^2$, 2000 $\mu m^2 \leq B_1 \leq 1$ cm$^2$, 3000 $\mu m^2 \leq B_1 \leq 1$ cm$^2$, 4000 $\mu m^2 \leq B_1 \leq 1$ cm$^2$, 5000 $\mu m^2 \leq B_1 \leq 1$ cm$^2$, 6000 $\mu m^2 \leq B_1 \leq 1$ cm$^2$, 7000 $\mu m^2 \leq B_1 \leq 1$ cm$^2$, 8000 $\mu m^2 \leq B_1 \leq 1$ cm$^2$, 9000 $\mu m^2 \leq B_1 \leq 1$ cm$^2$, 10000 $\mu m^2 \leq B_1 \leq 1$ cm$^2$, 15000 $\mu m^2 \leq B_1 \leq 1$ cm$^2$, 20000 $\mu m^2 \leq B_1 \leq 1$ cm$^2$, 50000 $\mu m^2 \leq B_1 \leq 1$ cm$^2$, 100000 $\mu m^2 \leq B_1 \leq 1$ cm$^2$, 150000 $\mu m^2 \leq B_1 \leq 1$ cm$^2$, 500000 $\mu m^2 \leq B_1 \leq 1$ cm$^2$, 1 mm$^2 \leq B_1 \leq 1$ cm$^2$, 10 mm$^2 \leq B_1 \leq 1$ cm$^2$, 20 mm$^2 \leq B_1 \leq 1$ cm$^2$, 30 mm$^2 \leq B_1 \leq 1$ cm$^2$, 40 mm$^2 \leq B_1 \leq 1$ cm$^2$, 50 mm$^2 \leq B_1 \leq 1$ cm$^2$, 60 mm$^2 \leq B_1 \leq 1$ cm$^2$, 70 mm$^2 \leq B_1 \leq 1$ cm$^2$, 80 mm$^2 \leq B_1 \leq 1$ cm$^2$, or 90 mm$^2 \leq B_1 \leq 1$ cm$^2$. Thus, with the first groove 101 meeting such area disposed on the positive electrode active material layer 12 of the positive electrode plate 100, the electrolyte retention effect can be improved, reducing the occurrence of ion disconnection caused by the electrolyte in the electrode assembly being squeezed by volume swelling of the negative electrode plate 300.

In some embodiments, a depth of a single first groove 101 is $H_1$, where 10 $\mu m \leq H_1 \leq 100$ $\mu m$, for example, 20 $\mu m \leq H_1 \leq 90$ $\mu m$, 30 $\mu m \leq H_1 \leq 80$ $\mu m$, 40 $\mu m \leq H_1 \leq 70$ $\mu m$, or 50 $\mu m \leq H_1 \leq 60$ $\mu m$. Thus, with the first groove 101 meeting such depth disposed on the positive electrode active material layer 12 of the positive electrode plate 100, the electrolyte retention effect can be improved, reducing the occurrence of ion disconnection caused by the electrolyte in the electrode assembly 1000 being squeezed by volume swelling of the negative electrode plate 300.

In some embodiments, a distance between two adjacent first grooves 101 is $D_1$, 0.5 mm$\leq D_1 \leq 10$ mm, for example, 1 mm$\leq D_1 \leq 10$ mm, 2 mm$\leq D_1 \leq 9$ mm, 3 mm$\leq D_1 \leq 8$ mm, 4 mm$\leq D_1 \leq 7$ mm, or 5 mm$\leq D_1 \leq 6$ mm. Thus, with the first groove 101 meeting such distance disposed on the positive electrode active material layer 12 of the positive electrode plate 100, the electrolyte retention effect can be improved, reducing the occurrence of ion disconnection caused by the electrolyte in the electrode assembly 1000 being squeezed by volume swelling of the negative electrode plate 300.

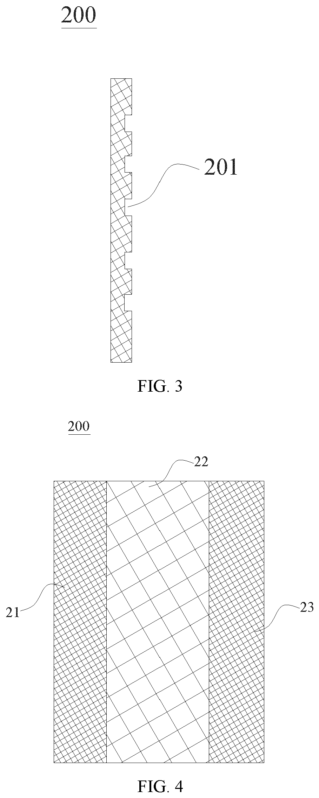

In some embodiments, a groove 10 is disposed on a surface of the separation member 200. As shown in FIG. 3, the separation member 200 is provided with a second groove 201 on a surface, preferably the separation member 200 is provided with multiple second grooves 201 on the surface. Thus, with the second groove 201 disposed on the surface of the separation member 200, electrolyte retention can be implemented, reducing the occurrence of ion disconnection caused by the electrolyte in the electrode assembly 1000 being squeezed by volume swelling of the negative electrode plate 300.

In an example, a material of the separation member 200 may include at least one of glass fibers, nanofibers, polyethylene, polypropylene, and non-woven fabrics.

In some embodiments, the second groove 201 is located in a region of 1/4 to 3/4, such as a region of 3/8 to 5/8, of a length of the separation member 200. Thus, with the second groove 201 disposed in such region of the separation member 200, the occurrence of ion disconnection caused by the electrolyte in the electrode assembly 1000 being squeezed by volume swelling of the negative electrode plate 300 can be reduced.

In some embodiments, an area of a single second groove 201 is $B_2$, where 10 $\mu m^2 \leq B_2 \leq 1000$ $\mu m^2$, for example, 20 $\mu m^2 \leq B_2 \leq 1000$ $\mu m^2$, 50 $\mu m^2 \leq B_2 \leq 1000$ $\mu m^2$, 100 $\mu m^2 \leq B_2 \leq 1000$ $\mu m^2$, 200 $\mu m^2 \leq B_2 \leq 1000$ $\mu m^2$, 300 $\mu m^2 \leq B_2 \leq 1000$ $\mu m^2$, 400 $\mu m^2 \leq B_2 \leq 1000$ $\mu m^2$, 500 $\mu m^2 \leq B_2 \leq 1000$ $\mu m^2$, 600 $\mu m^2 \leq B_2 \leq 1000$ $\mu m^2$, 700 $\mu m^2 \leq B_2 \leq 1000$ $\mu m^2$, 800 $\mu m^2 \leq B_2 \leq 1000$ $\mu m^2$, or 900 $\mu m^2 \leq B_2 \leq 1000$ $\mu m^2$. Thus, with the second groove 201 meeting such area disposed on the separation member 200, the electrolyte retention effect can be improved, reducing the occurrence of ion disconnection caused by the electrolyte in the electrode assembly 1000 being squeezed by volume swelling of the negative electrode plate 300.

In some embodiments, a depth of a single second groove 201 is $H_2$, where 1 $\mu m \leq H_2 \leq 30$ $\mu m$, for example, 2 $\mu m \leq H_2 \leq 28$ $\mu m$, 5 $\mu m \leq H_2 \leq 25$ $\mu m$, 7 $\mu m \leq H_2 \leq 23$ $\mu m$, 10 $\mu m \leq H_2 \leq 20$ $\mu m$, 12 $\mu m \leq H_2 \leq 18$ $\mu m$, or 15 $\mu m \leq H_2 \leq 18$ $\mu m$. Thus, with the second groove 201 meeting such depth disposed on the separation member 200, the electrolyte retention effect can be improved, reducing the occurrence of ion disconnection caused by the electrolyte in the electrode assembly 1000 being squeezed by volume swelling of the negative electrode plate 300.

In some embodiments, a distance between two adjacent second grooves 201 is $D_2$, where 5 $\mu m \leq D_2 \leq 100$ $\mu m$, for example, 10 $\mu m \leq D_2 \leq 95$ $\mu m$, 15 $\mu m \leq D_2 \leq 90$ $\mu m$, 20 $\mu m \leq D_2 \leq 85$ $\mu m$, 25 $\mu m \leq D_2 \leq 80$ $\mu m$, 30 $\mu m \leq D_2 \leq 75$ $\mu m$, 35 $\mu m \leq D_2 \leq 70$ $\mu m$, 40 $\mu m \leq D_2 \leq 65$ $\mu m$, 45 $\mu m \leq D_2 \leq 60$ $\mu m$, or 50 $\mu m \leq D_2 \leq 55$ $\mu m$. Thus, with the second groove 201 meeting such distance disposed on the separation member 200, the electrolyte retention effect can be improved, reducing the occurrence of ion disconnection caused by the electrolyte in the electrode assembly 1000 being squeezed by volume swelling of the negative electrode plate 300.

In some embodiments, as shown in FIG. 4, the separation member 200 includes a first separator 21, a middle separator 22, and a second separator 23 stacked along a thickness direction of the separation member 200, and a thickness of the middle separator 22 is not less than a thickness of the first separator 21 or the second separator 23. In an example, a pore size of the middle separator 22 is larger than a pore size of the first separator 21 or the second separator 22; and/or a porosity of the middle separator 22 is larger than a porosity of the first separator 21 or the second separator 23. Thus, with the use of the middle separator 22 having a relatively large pore size and/or a relatively large porosity, more electrolyte can be stored, so that when the negative electrode plate 300 undergoes volume swelling and squeezes the electrode assembly 1000, the electrolyte stored in the middle separator 22 can promptly replenish the electrolyte in the electrode assembly 1000 in the case of electrolyte shortage.

In some embodiments of this application, the pore size of the first separator 21 is 20 nm-50 nm, for example, 22 nm-48 nm, 25 nm-45 nm, 27 nm-42 nm, 30 nm-40 nm, 32 nm-38 nm, or 32 nm-35 nm. Thus, the first separator 21 meeting this condition not only has high ionic conductivity but also has excellent electrolyte retention effect, improving the kinetic performance of the battery while reducing the occurrence of ion disconnection caused by the electrolyte in the electrode assembly 1000 being squeezed by volume swelling of the negative electrode plate 300.

In some embodiments, the pore size of the middle separator 22 is 30 nm-100 nm, for example, 30 nm-100 nm, 35 nm-95 nm, 40 nm-90 nm, 45 nm-85 nm, 50 nm-80 nm, 55 nm-75 nm, 60 nm-70 nm, or 65 nm-70 nm. Thus, the middle separator 22 meeting such pore size can store more electrolyte, so that when the negative electrode plate 300 undergoes volume swelling and squeezes the electrolyte in the electrode assembly 1000, the electrolyte in the electrode assembly 1000 can be promptly replenished in the case of electrolyte shortage.

In some embodiments, the pore size of the second separator 23 is 20 nm-50 nm, for example, 22 nm-48 nm, 25 nm-45 nm, 27 nm-42 nm, 30 nm-40 nm, 32 nm-38 nm, or 32 nm-35 nm. Thus, the second separation 23 meeting this condition not only has high ionic conductivity but also has excellent electrolyte retention effect, improving the kinetic performance of the battery while reducing the occurrence of ion disconnection caused by the electrolyte in the electrode assembly 1000 being squeezed by volume swelling of the negative electrode plate 300.

In some embodiments, the porosity of the first separator 21 is 30%-70%, for example, 35%-70%, 40%-70%, 45%-70%, 50%-70%, 55%-70%, 60%-70%, or 65%-70%; the porosity of the middle separator 22 is 40%-90%, for example, 45%-90%, 50%-90%, 55%-90%, 60%-90%, 65%-90%, 70%-90%, 75%-90%, 80%-90%, or 85%-90%; and the porosity of the second separator 23 is 30%-70%, for example, 35%-70%, 40%-70%, 45%-70%, 50%-70%, 55%-70%, 60%-70%, or 65%-70%. Thus, the middle separator 21 meeting such porosity can store more electrolyte, so that when the negative electrode plate 300 undergoes volume swelling and squeezes the electrolyte in the electrode assembly 1000, the electrolyte in the electrode assembly 1000 can be promptly replenished in the case of electrolyte shortage.

According to some examples, for the porosity testing methods for the first separator 100, the middle separator 200, and the second separator 300, reference may be made to GB/T 24586-2009 true density method for porosity test.

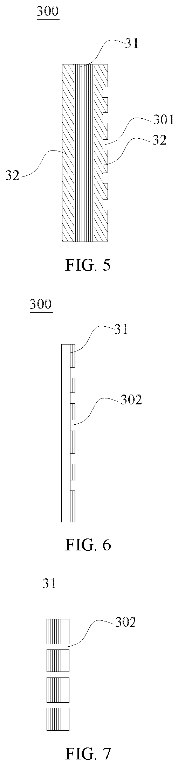

In some embodiments, the groove 10 is disposed on the surface of the negative electrode plate 300. As shown in FIG. 5, the negative electrode plate 300 includes a negative electrode current collector 31 and a negative electrode active substance layer 32, where the negative electrode active substance layer 32 is disposed on at least one side of the negative electrode current collector 31, and the negative electrode active substance layer 32 is provided with a third groove 301 on a surface, preferably the negative electrode active substance layer 32 being provided with multiple third grooves 301 on the surface. Thus, with the third groove 301 disposed on the negative electrode active substance layer 32 of the negative electrode plate 300, the electrolyte retention effect of the negative electrode plate 300 can be improved, reducing the occurrence of ion disconnection caused by the electrolyte in the electrode assembly 1000 being squeezed by the volume swelling of the negative electrode plate 300, reducing the battery capacity loss, and improving the cycle life of the battery.

In some embodiments, the third groove 301 is located in a region of 1/4 to 3/4, such as a region of 3/8 to 5/8, of a length of the negative electrode plate 300. Thus, with the third groove 301 disposed in such region of the negative electrode plate 300, the occurrence of ion disconnection caused by the electrolyte in the electrode assembly 1000 being squeezed by volume swelling of the negative electrode plate 300 can be reduced. Moreover, metal ions can deposit into the groove 10, reducing metal dendrites on the surface of the negative electrode plate 300 and improving the battery safety performance.

In some embodiments, an area of a single third groove 301 is $B_3$, where 50 $\mu m^2 \leq B_3 \leq 1$ mm$^2$, for example, 80 $\mu m^2 \leq B_3 \leq 1$ mm$^2$, 100 $\mu m^2 \leq B_3 \leq 1$ mm$^2$, 300 $\mu m^2 \leq B_3 \leq 1$ mm$^2$, 500 $\mu m^2 \leq B_3 \leq 1$ mm$^2$, 800 $\mu m^2 \leq B_3 \leq 1$ mm$^2$, 1000 $\mu m^2 \leq B_3 \leq 1$ mm$^2$, 1500 $\mu m^2 \leq B_3 \leq 1$ mm$^2$, 2000 $\mu m^2 \leq B_3 \leq 1$ mm$^2$, 3000 $\mu m^2 \leq B_3 \leq 1$ mm$^2$, 4000 $\mu m^2 \leq B_3 \leq 1$ mm$^2$, 5000 $\mu m^2 \leq B_3 \leq 1$ mm$^2$, 6000 $\mu m^2 \leq B_3 \leq 1$ mm$^2$, 7000 $\mu m^2 \leq B_3 \leq 1$ mm$^2$, 8000 $\mu m^2 \leq B_3 \leq 1$ mm$^2$, 9000 $\mu m^2 \leq B_3 \leq 1$ mm$^2$, 10000 $\mu m^2 \leq B_3 \leq 1$ mm$^2$, 15000 $\mu m^2 \leq B_3$ 1 mm$^2$, 20000 $\mu m^2 \leq B_3 \leq 1$ mm$^2$, 50000 $\mu m^2 \leq B_3 \leq 1$ mm$^2$, 100000 $\mu m^2 \leq B_3 \leq 1$ mm$^2$, 150000 $\mu m^2 \leq B_3 \leq 1$ mm$^2$, or 500000 $\mu m^2 \leq B_3 \leq 1$ mm$^2$. Thus, with the third groove 301 meeting such area disposed on the negative electrode active material layer 32 of the negative electrode plate 300, the occurrence of ion disconnection caused by the electrolyte in the electrode assembly 1000 being squeezed by volume swelling of the negative electrode plate 300 can be reduced. Moreover, metal ions can deposit into the groove 10, reducing metal dendrites on the surface of the negative electrode plate 300 and improving the battery safety performance.

In some embodiments, a depth of a single third groove 301 is $H_3$, where 1 $\mu m \leq H_3 \leq 200$ $\mu m$, for example, 10 $\mu m \leq H_3 \leq 170$ $\mu m$, 30 $\mu m \leq H_3 \leq 150$ $\mu m$, 50 $\mu m \leq H_3 \leq 125$ $\mu m$, or 75 $\mu m \leq H_3 \leq 100$ $\mu m$. Thus, with the third groove 301 meeting such depth disposed on the negative electrode plate 300, the occurrence of ion disconnection caused by the electrolyte in the electrode assembly 1000 being squeezed by volume swelling of the negative electrode plate 300 can be reduced. Moreover, metal ions can deposit into the groove 10, reducing metal dendrites on the surface of the negative electrode plate 300 and improving the battery safety performance.

In some embodiments, a distance between two adjacent third grooves 301 is $D_3$, 0.5 mm $\leq D_3 \leq 10$ mm, for

example, 1 mm≤$D_3$≤10 mm, 2 mm≤$D_3$≤9 mm, 3 mm≤$D_3$≤8 mm, 4 mm≤$D_3$≤7 mm, or 5 mm≤$D_3$≤6 mm. Thus, with the second groove 201 meeting such distance disposed on the separation member 200, the occurrence of ion disconnection caused by the electrolyte in the electrode assembly 1000 being squeezed by volume swelling of the negative electrode plate 300 can be reduced. Moreover, metal ions can deposit into the groove 10, reducing metal dendrites on the surface of the negative electrode plate 300 and improving the battery safety performance.

In some embodiments, any one of the positive electrode plate 100, the separation member 200, and the negative electrode plate 300 may be provided with a groove 10 on a surface, or any two of the positive electrode plate 100, the separation member 200, and the negative electrode plate 300 may be provided with a groove 10 on a surface, or all of the positive electrode plate 100, the separation member 200, and the negative electrode plate 300 may be provided with a groove 10 on a surface.

In some embodiments, a surface of at least one of the positive electrode plate 100, the separation member 200, and the negative electrode plate 300 is arranged as a rough surface. Thus, with the surface of at least one of the positive electrode plate 100, the separation member 200, and the negative electrode plate 300 arranged as a rough surface, the electrolyte retention effect of the electrode assembly 1000 can be improved, reducing the occurrence of ion disconnection caused by the electrolyte in the electrode assembly 1000 being squeezed by volume swelling of the negative electrode plate 300. Specifically, the surface of the positive electrode plate 100 arranged as the rough surface is a surface of the positive electrode active layer 12; if the negative electrode plate 300 includes a negative electrode active material layer 32, a surface of the negative electrode active layer 32 is arranged as a rough surface; and if the negative electrode plate 300 is a negative electrode current collector 31, a surface of the negative electrode current collector 31 is arranged as a rough surface.

In some embodiments, a roughness $R_1$ of the rough surface of the negative electrode plate 300 satisfies Ra0.2≤$R_1$≤Ra25, for example, Ra0.5≤$R_1$≤Ra25, Ra1≤$R_1$≤Ra23, Ra3≤$R_1$≤Ra20, Ra5≤$R_1$≤Ra18, Ra7≤$R_1$≤Ra15, or Ra10≤$R_1$≤Ra13. This can further improve the electrolyte retention effect of the negative electrode plate 300, reducing the occurrence of ion disconnection caused by the electrolyte in the electrode assembly 1000 being squeezed by volume swelling of the negative electrode plate 300.

In some embodiments, a roughness $R_2$ of the rough surface of the positive electrode plate 100 satisfies Ra0.1≤$R_2$≤Ra50, for example, Ra0.5≤$R_2$≤Ra50, Ra1≤$R_2$≤Ra50, Ra5≤$R_2$≤Ra45, Ra10≤$R_2$≤Ra40, Ra15<$R_2$<Ra35, Ra20≤$R_2$≤Ra30, or Ra25≤$R_2$≤Ra30. This can further improve the electrolyte retention effect of the positive electrode plate 100, reducing the occurrence of ion disconnection caused by the electrolyte in the electrode assembly 1000 being squeezed by volume swelling of the negative electrode plate 300.

In some embodiments, a roughness $R_3$ of the rough surface of the separation member 200 satisfies $R_3$≥Ra12.5, for example, Ra15, Ra20, Ra25, Ra30, Ra35, Ra40, Ra45, or Ra50. Thus, the electrolyte retention effect of the separation member 200 can be improved, reducing the occurrence of ion disconnection caused by the electrolyte in the electrode assembly 1000 being squeezed by volume swelling of the negative electrode plate 300.

According to some examples, for the method for measuring roughness of the rough surfaces of the positive electrode plate 100, the separation member 200, and the negative electrode plate 300, reference may be made to GB 2523-1990 Cold rolled sheet (strip) - Measuring method for surface roughness.

In some embodiments, an elastic modulus of the separation member 200 is 200 MPa-8000 MPa, for example, 200 MPa, 500 MPa, 1000 MPa, 1500 MPa, 2000 MPa, 2500 MPa, 3000 MPa, 4000 MPa, 5000 MPa, 6000 MPa, 7000 MPa, or 8000 MPa. Thus, when the negative electrode plate 300 undergoes volume swelling, the battery swelling caused by the volume swelling of the negative electrode plate 300 can be effectively mitigated, improving the battery safety performance.

In some embodiments, as shown in FIG. 6, the negative electrode plate 300 includes a negative electrode current collector 31, and the negative electrode current collector 31 is provided with a fourth groove 302 on a surface, that is, the negative electrode current collector 31 is used as the negative electrode plate 300, preferably the negative electrode current collector 31 being provided with multiple fourth grooves 302 on the surface. Thus, with the fourth groove 302 disposed on the surface of the negative electrode current collector 31, the electrolyte retention effect can be improved, reducing the occurrence of ion disconnection caused by the electrolyte in the electrode assembly 1000 being squeezed by volume swelling of the negative electrode plate 300. Moreover, metal ions can evenly deposit into the fourth groove 302, reducing the metal dendrites on the surface of the negative electrode plate 300 and the volume swelling of the negative electrode plate 300, and improving the battery safety performance.

The negative electrode current collector 31 may be a common metal foil sheet or a composite current collector (for example, the composite current collector may be made by providing a metal material on a polymer matrix). In an example, a copper foil may be used as the negative electrode current collector 31.

A specific type of the negative electrode active material in the negative electrode active material layer is not limited. Any active material known in the art that can be used as the negative electrode of the battery can be used, and those skilled in the art may select an active material based on actual needs. In an example, the negative electrode active material may include but is not limited to one or more of artificial graphite, natural graphite, hard carbon, soft carbon, silicon-based material, and tin-based material. The silicon-based material may include one or more of elemental silicon, silicon-oxygen compound (for example, silicon monoxide), silicon-carbon composite, silicon-nitrogen composite, and silicon alloy. The tin-based material may include one or more of elemental tin, tin-oxygen compound, and tin alloy. These materials are all commercially available.

In some embodiments, the negative electrode active material may include a silicon-based material to further increase the energy density of the battery.

The negative electrode active material layer 32 usually further optionally includes a binder, a conductive agent, and other optional adjuvants.

In an example, the conductive agent may be one or more of superconducting carbon, acetylene black, carbon black, Ketjen black, carbon dots, carbon nanotubes, graphene, and carbon nanofibers.

In an example, the binder may be one or more of styrene-butadiene rubber (SBR), water-based acrylic resin (water-based acrylic resin), polyvinylidene fluoride (PVDF), polytetrafluoroethylene (PTFE), ethylene-vinyl acetate copolymer (EVA), polyvinyl alcohol (PVA), and polyvinyl butyral (PVB).

In an example, the other optional adjuvants may be, for example, a thickening and dispersing agent (such as sodium carboxymethyl cellulose CMC-Na) and a PTC thermistor material.

In some embodiments, the fourth groove 302 is located in a region of 1/4 to 3/4, such as a region of 3/8 to 5/8, of a length of the negative electrode current collector 31. Thus, with the fourth groove 302 disposed in the region of 1/4 to 3/4 of the length of the negative electrode current collector 31, the occurrence of ion disconnection caused by the electrolyte in the electrode assembly 1000 being squeezed by volume swelling of the negative electrode plate 300 can be reduced. Moreover, metal ions can deposit into the fourth groove 302, reducing the metal dendrites on the surface of the negative electrode plate 300 and the volume swelling of the negative electrode plate 300, and improving the battery safety performance.

In some embodiments, an area of a single fourth groove 302 is $B_4$, where $70\ \mu m^2 \leq B_4 \leq 2\ mm^2$, for example, $100\ \mu m^2 \leq B_4 \leq 2\ mm^2$, $500\ \mu m^2 \leq B_4 \leq 2\ mm^2$, $1000\ \mu m^2 \leq B_4 \leq 2\ mm^2$, $1500\ \mu m^2 \leq B_4 \leq 2\ mm^2$, $2000\ \mu m^2 \leq B_4 \leq 2\ mm^2$, $3000\ \mu m^2 \leq B_4 \leq 2\ mm^2$, $4000\ \mu m^2 \leq B_4 \leq 2\ mm^2$, $5000\ \mu m^2 \leq B_4 \leq 2\ mm^2$, $6000\ \mu m^2 \leq B_4 \leq 2\ mm^2$, $7000\ \mu m^2 \leq B_4 \leq 2\ mm^2$, $8000\ \mu m^2 \leq B_4 \leq 2\ mm^2$, $9000\ \mu m^2 \leq B_4 \leq 2\ mm^2$, $10000\ \mu m^2 \leq B_4 \leq 2\ mm^2$, $15000\ \mu m^2 \leq B_4 \leq 2\ mm^2$, $20000\ \mu m^2 \leq B_4 \leq 2\ mm^2$, $50000\ \mu m^2 \leq B_4 \leq 2\ mm^2$, $100000\ \mu m^2 \leq B_4 \leq 2\ mm^2$, $150000\ \mu m^2 \leq B_4 \leq 2\ mm^2$, $500000\ \mu m^2 \leq B_4 \leq 2\ mm^2$, or $1\ mm^2 \leq B_4 \leq 2\ mm^2$. Thus, with the fourth groove 302 meeting such area disposed on the negative electrode current collector 31, the occurrence of ion disconnection caused by the electrolyte in the electrode assembly 1000 being squeezed by volume swelling of the negative electrode plate 300 can be reduced. Moreover, metal ions can deposit into the fourth groove 302, reducing the metal dendrites on the surface of the negative electrode plate 300 and the volume swelling of the negative electrode plate 300, and improving the battery safety performance. In some other embodiments, the area of a single fourth groove 302 is $B_4$, which is $300\ \mu m^2 - 1\ mm^2$.

In some embodiments, a depth of a single fourth groove 302 is $H_4$, where $1\ \mu m \leq H_4 \leq 20\ \mu m$, for example, $2\ \mu m \leq H_2 \leq 18\ \mu m$, $5\ \mu m \leq H_2 \leq 15\ \mu m$, $7\ \mu m \leq H_2 \leq 13\ \mu m$, or $10\ \mu m \leq H_2 \leq 13\ \mu m$. Thus, with the fourth groove meeting such depth disposed on the negative electrode current collector, the occurrence of ion disconnection caused by the electrolyte in the electrode assembly being squeezed by volume swelling of the negative electrode plate can be reduced. Moreover, metal ions can deposit into the groove, reducing the metal dendrites on the surface of the negative electrode plate and the volume swelling of the negative electrode plate, and improving the battery safety performance.

In some embodiments, a distance between two adjacent fourth grooves 302 is $D_4$, where $0.01\ mm \leq D_4 \leq 10\ mm$, for example, $0.05\ mm \leq D_4 \leq 10\ mm$, $0.08\ mm \leq D_4 \leq 10\ mm$, $0.1\ mm \leq D_4 \leq 10\ mm$, $0.3\ mm \leq D_4 \leq 10\ mm$, $0.5\ mm \leq D_4 \leq 10\ mm$, $0.7\ mm \leq D_4 \leq 10\ mm$, $1\ mm \leq D_4 \leq 10\ mm$, $2\ mm \leq D_4 \leq 9\ mm$, $3\ mm \leq D_4 \leq 8\ mm$, $4\ mm \leq D_4 \leq 7\ mm$, or $5\ mm \leq D_4 \leq 6\ mm$. Thus, with the fourth groove 302 meeting such distance disposed on the negative electrode current collector 31, the occurrence of ion disconnection caused by the electrolyte in the electrode assembly 1000 being squeezed by volume swelling of the negative electrode plate 300 can be reduced. Moreover, metal ions can deposit into the fourth groove 302, reducing the metal dendrites on the surface of the negative electrode plate 300 and the volume swelling of the negative electrode plate 300, and improving the battery safety performance. In some other embodiments, the distance between two adjacent fourth grooves 302 is $D_4$, which is $0.5\ mm - 2\ mm$.

In some embodiments, as shown in FIG. 7, the fourth groove 302 extends through the negative electrode current collector 31. This can improve the electrolyte retention effect, reducing the occurrence of ion disconnection caused by the electrolyte in the electrode assembly 1000 being squeezed by volume swelling of the negative electrode plate 300. This also provides sufficient space for deposition of metal ions, reducing the metal dendrites on the surface of the negative electrode plate 300 and the volume swelling of the negative electrode plate 300, and improving the battery safety performance.

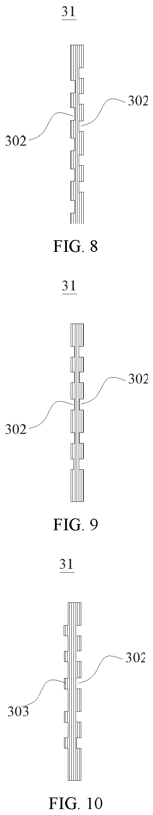

In some embodiments, as shown in FIG. 8, the negative electrode current collector 31 is provided with the fourth groove 302 on both sides. This can improve the electrolyte retention effect, reducing the occurrence of ion disconnection caused by the electrolyte in the electrode assembly 1000 being squeezed by volume swelling of the negative electrode plate 300. Moreover, both sides of the negative electrode current collector 31 can provide sufficient space for deposition of metal ions, reducing the metal dendrites on the surface of the negative electrode plate 300 and the volume swelling of the negative electrode plate 300, and improving the battery safety performance. In an example, as shown in FIG. 8, the fourth grooves 302 on two sides of the negative electrode current collector 31 are staggered. This can improve the electrolyte retention effect, reducing the occurrence of ion disconnection caused by the electrolyte in the electrode assembly 1000 being squeezed by volume swelling of the negative electrode plate 300. This also provides sufficient space for deposition of metal ions, reducing the metal dendrites on the surface of the negative electrode plate 300 and the volume swelling of the negative electrode plate 300, and improving the battery safety performance.

In some embodiments of this application, when the fourth grooves 302 on two sides of the negative electrode current collector 31 are staggered, a ratio of the depth of a single fourth groove 302 to a thickness of the negative electrode current collector 32 is 0.05-0.7, for example, 0.05-0.65, 0.05-0.6, 0.05-0.55, 0.05-0.5, 0.05-0.45, 0.05-0.4, 0.05-0.35, 0.05-0.3, 0.05-0.25, 0.05-0.2, 0.05-0.15, or 0.05-0.1. This allows for sufficient space for the electrolyte and metal dendrites while maintaining good strength of the negative electrode current collector 31. In some other embodiments, the ratio of the depth of a single fourth groove 302 to the thickness of the negative electrode current collector 32 is preferably 0.05-0.5, more preferably 0.05-0.3.

In some embodiments, as shown in FIG. 9, the fourth grooves 302 on two sides of the negative electrode current collector 31 are arranged opposite each other. This can improve the electrolyte retention effect, reducing the occurrence of ion disconnection caused by the electrolyte in the electrode assembly 1000 being squeezed by volume swelling of the negative electrode plate 300. This also provides sufficient space for deposition of metal ions, reducing the metal dendrites on the surface of the negative electrode plate 300 and the volume swelling of the negative electrode plate 300, and improving the battery safety performance.

In some embodiments, when the fourth grooves 302 on two sides of the negative electrode current collector 31 are arranged opposite each other, the ratio of the depth of a single fourth groove 302 to the thickness of the negative electrode current collector 31 is 0.05-0.4, for example, 0.05-0.35, 0.05-0.3, 0.05-0.25, 0.05-0.2, 0.05-0.15, or 0.05-0.1. This allows for sufficient space for the electrolyte and metal dendrites while maintaining good strength of the negative electrode current collector 31. In some other embodiments, the ratio of the depth of a single fourth groove 302 to the thickness of the negative electrode current collector 32 is preferably 0.05-0.2, more preferably 0.05-0.1.

In some embodiments, as shown in FIG. 10, a protrusion 303 is formed on a surface of the negative electrode current collector 31. Thus, with the protrusion 303 formed on the surface of the negative electrode current collector 31, the protrusion 303 can provide larger electrolyte storage space for the negative electrode current collector 31, reducing the occurrence of ion disconnection caused by the electrolyte in the electrode assembly 1000 being squeezed by volume swelling of the negative electrode plate 300. Moreover, the protrusion 303 can provide larger metal deposition space, reducing the metal dendrites on the surface of the negative electrode plate 300 and the volume swelling of the negative electrode plate 300, and improving the battery safety performance. In an example, as shown in FIG. 10, the fourth groove 302 is formed on one side of the negative electrode current collector 31, and the protrusion 303 is formed at a position corresponding to the fourth groove 302 on the other side of the negative electrode current collector 31.

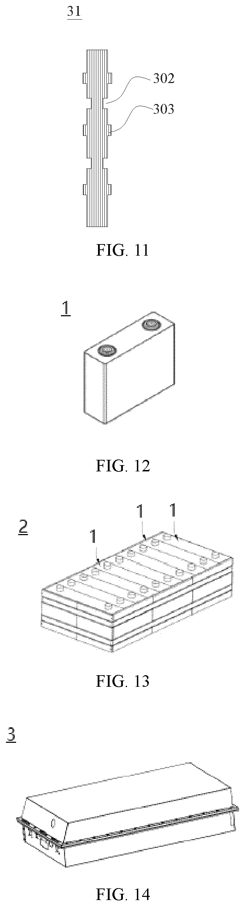

In some embodiments, as shown in FIG. 11, both the protrusions 303 and the fourth grooves 302 are formed on two sides of the negative electrode current collector 31, and the fourth groove 302 and the protrusion 303 on the same side of the negative electrode current collector 31 are alternately arranged. In an example, the fourth groove 302 on one side of the negative electrode current collector 31 is arranged opposite the protrusion 303 on the other side of the negative electrode current collector 31. Thus, with both the protrusion 304 and the fourth groove 302 formed on the surface of the negative electrode current collector 31, larger electrolyte storage space can be provided for the negative electrode current collector 31, reducing the occurrence of ion disconnection caused by the electrolyte in the electrode assembly 1000 being squeezed by volume swelling of the negative electrode plate 300. Moreover, larger metal deposition space can be provided, reducing the metal dendrites on the surface of the negative electrode plate 300 and the volume swelling of the negative electrode plate 300, and improving the battery safety performance.

In some embodiments, a height of the protrusion 303 is 1 $\mu$m-20 $\mu$m, for example, 2 $\mu$m-18 $\mu$m, 5 $\mu$m-15 $\mu$m, 7 $\mu$m-12 $\mu$m, or 7 $\mu$m-10 $\mu$m. Thus, with the protrusion 303 of such height formed on the surface of the negative electrode current collector 31, larger electrolyte storage space can be provided for the negative electrode current collector 31, reducing the occurrence of ion disconnection caused by the electrolyte in the electrode assembly 1000 being squeezed by volume swelling of the negative electrode plate 300. Moreover, larger metal deposition space can be provided, reducing the metal dendrites on the surface of the negative electrode plate 300 and the volume swelling of the negative electrode plate 300, and improving the battery safety performance.

In some embodiments, the fourth groove 302 is provided with metallic dendrites. This can guide metal ions to deposit into the groove, reducing metal dendrites on the surface of the negative electrode plate 300 and improving battery safety performance.

In some embodiments, a coverage rate of the fourth groove 302 on a single side of the negative electrode current collector 31 is 10%-70%, for example, 15%-65%, 20%-60%, 25%-55%, 30%-50%, 35%-45%, or 35%-40%. Thus, larger electrolyte storage space and metal deposition space can be provided for the negative electrode current collector 302, reducing battery capacity loss and improving battery safety performance. Specifically, the coverage rate of the fourth groove 302 on a single side of the negative electrode current collector 31 = total area of the fourth groove 302 on a single side/total area of a single negative electrode current collector 31 (excluding tabs).

In some embodiments, shapes of the first groove 101, the second groove 201, the third groove 301, and the fourth groove 302 are not particularly limited, and may be, for example, circular, oval, square, or hexagonal, preferably circular or oval.

In some embodiments, when a tensile strain of the negative electrode current collector 31 is 1.5%, a sheet resistance growth rate T of the negative electrode current collector 31 is ≤5%, for example, T≤4.5%, T≤4%, T≤3.5%, T≤3%, T≤2.5%, T≤2%, T≤1.5%, preferably T≤2.5%. This can prevent an abrupt increase in resistance caused by tensile deformation of the negative electrode current collector 31, ensuring good conductivity and current collection performance of the negative electrode current collector 31. This in turn allows the electrochemical apparatus using the same to have low impedance and small negative electrode polarization, thereby allowing the electrochemical apparatus to have good electrochemical performances such as rate performance, cycling performance, and kinetic performance.

According to some examples, when the tensile strain of the negative electrode current collector 31 is 1.5%, the sheet resistance growth rate T of the negative electrode current collector 31 can be determined using the method known in the art. In an example, the negative electrode current collector 31 is cut into samples of 20 mm×200 mm; the sheet resistance in the center region of the sample is measured using the four-probe method and recorded as $R_1$; a Gotech tensile machine is used to stretch the center region of the sample, with the initial position set and 50 mm of the sample left between the fixtures, where the stretching is performed at a speed of 50 mm/min and stopped when the stretching distance becomes 1.5% of the original length of the sample, that is, when the stretching distance is 0.75 mm; the stretched sample is taken out, and the sheet resistance of the negative electrode current collector 31 between the fixtures is measured and recorded as $R_2$; and the sheet resistance growth rate T of the negative electrode current collector 31 when the tensile strain of the negative electrode current collector 31 is 1.5% is calculated according to the formula $T=(R_2-R_1)/R_1\times100\%$. The method for measuring the sheet resistance of the sample using the four-probe method is as follows: The RTS-9 double electric four-probe tester is used, where the test environment is: normal temperature 23±2°C, 0.1 MPa, and relative humidity ≤65%. During the test, the surface of the sample is cleaned, and then the sample is placed horizontally on the test bench. The four probes are lowered so that the probes are in good contact with the surface of the sample. The automatic test mode is set to calibrate the current range for the sample, and the sheet resistance is measured in a suitable current range. Eight to ten data points are selected on the same sample for data measurement accuracy and error analysis. Finally, the average value is taken and recorded as the sheet resistance value of the sample.

In some embodiments, the electrode assembly 1000 may include an electrolyte. The electrolyte transports ions between the positive electrode plate 100 and the negative electrode plate 300. The electrolyte may include an electrolytic salt and a solvent.

When the battery is a lithium-ion battery, in an example, the electrolytic salt may include one or more selected from a group consisting of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bistrifluoromethanesulfonimide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate ($LiPO_2F_2$), lithium difluorodioxalate phosphate (LiDFOP), and lithium tetrafluoro oxalato phosphate (LiTFOP).

When the battery is a sodium-ion battery, in an example, the electrolyte sodium salt includes at least one of sodium hexafluorophosphate, sodium difluoro(oxalato)borate, sodium tetrafluoroborate, sodium bis(oxalato)borate, sodium perchlorate, sodium hexafluoroarsenate, sodium bis(fluorosulfonyl)imide, sodium trifluoromethanesulfonate, and sodium bis(trifluoromethanesulfonyl)imide.

In an example, the solvent may include one or more selected from a group consisting of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-gamma-butyrolactone (GBL), sulfolane (SF), methyl sulfonyl methane (MSM), ethyl methanesulfonate (EMS), and diethyl sulfone (ESE).

In some embodiments, the electrolyte further includes an additive. For example, the additive may include a negative electrode film-forming additive, or may include a positive electrode film-forming additive, or may include an additive capable of improving some performance of the battery, for example, an additive for improving overcharge resistance performance of the battery, an additive for improving high-temperature performance of the battery, or an additive for improving low-temperature performance of the battery.

A second aspect of this application provides a battery including the electrode assembly according to the first aspect. Thus, during the charge and discharge cycles, the battery has the advantages of small capacity loss and high safety.

The embodiments of this application do not impose any special limitations on a shape of the battery, and the battery may be cylindrical, rectangular, or of any other shapes. FIG. 12 shows a rectangular battery 1 as an example.

In some embodiments, the battery may include an outer package. The outer package is used for packaging a positive electrode plate, a negative electrode plate, and an electrolyte.

In some embodiments, the outer package may include a housing and a cover plate. The housing may include a base plate and side plates connected onto the base plate, and the base plate and the side plates enclose an accommodating cavity. The housing has an opening communicating with the accommodating cavity, and the cover plate can cover the opening to close the accommodating cavity.

The positive electrode plate, the negative electrode plate, and the separator may be made into an electrode assembly through winding or lamination. The electrode assembly is packaged in the accommodating cavity. The electrolyte may be a liquid electrolyte, and the liquid electrolyte infiltrates into the electrode assembly. There may be one or more electrode assemblies in the battery, and the quantity may be adjusted as required.

In some embodiments, the outer package of the battery may be a hard shell, for example, a hard plastic shell, an aluminum shell, or a steel shell.

The outer package of the battery may alternatively be a soft pack, for example, a soft pouch. A material of the soft package may be plastic, for example, may include one or more of polypropylene (PP), polybutylene terephthalate (PBT), and polybutylene succinate (PBS).

In some embodiments, batteries may be assembled into a battery module, and the battery module may include a plurality of batteries. A specific quantity may be adjusted based on application and capacity of the battery module.

FIG. 13 shows a battery module 2 as an example. Referring to FIG. 13, in the battery module 2, a plurality of batteries 1 may be sequentially arranged in a length direction of the battery module 2. Certainly, the batteries may alternatively be arranged in any other manner. Further, the plurality of batteries 1 may be fastened through fasteners.

The battery module 2 may further include a shell with an accommodating space, and the plurality of secondary batteries 1 are accommodated in the accommodating space. In some embodiments, the battery module may be further assembled into a battery pack, and a quantity of battery modules included in the battery pack may be adjusted based on application and capacity of the battery pack.

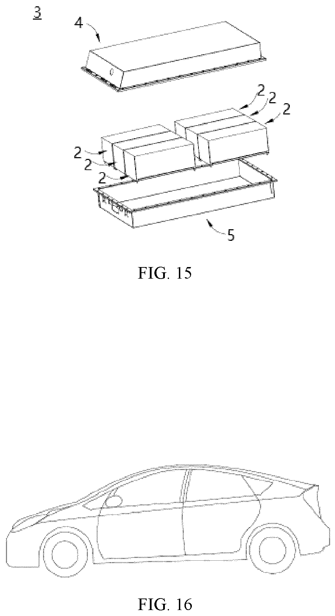

FIG. 14 and FIG. 15 show a battery pack 3 as an example. Referring to FIG. 14 and FIG. 15, the battery pack 3 may include a battery box and a plurality of battery modules 2 arranged in the battery box. The battery box includes an upper box body 4 and a lower box body 5. The upper box body 4 can cover the lower box body 5 to form an enclosed space for accommodating the battery modules 2. The plurality of battery modules 2 may be arranged in the battery box in any manner.

[Electric apparatus]

This application further provides an electric apparatus. The electric apparatus includes the foregoing battery, where the battery is configured to supply electric energy. Specifically, the battery may be used as a power source of the electric apparatus, and may also be used as an energy storage unit of the electric apparatus. The electric apparatus may be but is not limited to a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, or an energy storage system.

FIG. 16 shows an electric apparatus as an example. The electric apparatus is a battery electric vehicle, a hybrid electric vehicle, or a plug-in hybrid electric vehicle.

In another example, the electric apparatus may be a mobile phone, a tablet computer, or a notebook computer. Such electric apparatus is generally required to be light and thin and may use a battery as its power source.

To describe the technical problems solved by the embodiments of this application, technical solutions, and beneficial effects more clearly, the following further provides descriptions in detail with reference to the embodiments and accompanying drawings. Apparently, the described embodiments are only some but not all of the embodiments of this application. The following description of at least one example embodiment is merely illustrative and definitely is not construed as any limitation on this application or on use of this application. All other embodiments obtained by persons of ordinary skill in the art based on the embodiments of this application without creative efforts shall fall within the protection scope of this application.

Example 1

1. Preparation of positive electrode plate

A binder polyvinylidene fluoride was fully dissolved in N-methylpyrrolidone, and then a conductive agent carbon black and a positive electrode active material $Na_4Fe_3(PO_4)_2P_2O_7$ were added to produce a uniformly dispersed positive electrode slurry (a mass ratio of the polyvinylidene fluoride, conductive agent carbon black, and positive electrode active

material $Na_4Fe_3(PO_4)_2P_2O_7$ was 10:10:80). The positive electrode slurry was evenly applied onto two surfaces of the aluminum foil which was then transferred to a vacuum drying oven and fully dried. The obtained electrode plate was rolled and finally punched to obtain a positive electrode plate. In addition, circular first grooves were created on two surfaces of the positive electrode plate. Table 1 lists related parameters of the first groove.

2. Preparation of negative electrode plate

A negative electrode active material artificial graphite, a conductive agent carbon black (Super P), a binder styrene-butadiene rubber (SBR), and sodium carboxymethyl cellulose (CMC) were mixed to uniformity at a mass ratio of 96.4:0.7:1.8:1.1 in an appropriate amount of solvent deionized water to obtain a negative electrode slurry. The negative electrode slurry was applied on a negative electrode current collector copper foil, followed by processes of drying, cold pressing, slitting, and cutting to obtain a negative electrode plate.

3. Separator

The separator was a polyethylene film.

4. Preparation of electrolyte

Ethylene carbonate (EC) and ethyl methyl carbonate (EMC) were mixed at a mass ratio of 30:70 to obtain an organic solvent. Fully dried electrolytic salt $NaPF_6$ was dissolved in the above mixed solvent, with a concentration of the electrolytic salt being 1.0 mol/L. Then, the resulting product was well mixed to obtain an electrolyte.

5. Preparation of battery

The positive electrode plate, the separator, and the negative electrode plate were sequentially stacked so that the separator was located between the positive electrode plate and the negative electrode plate to provide separation. Then, the resulting stack was wound to form an electrode assembly. The electrode assembly was placed in the outer package and the prepared electrolyte was injected into the lithium-ion battery that was dried, followed by processes including vacuum packaging, standing, formation, and shaping, to obtain a sodium-ion battery.

The preparation methods of the sodium-ion batteries in Examples 2 to 5 are similar to that in Example 1, with the differences listed in Table 1.

**Table 1**

| | First groove | | | | |
|---|---|---|---|---|---|
| | Arrangement position | Area $B_1$ ($\mu m^2$) | Depth $H_1$ ($\mu m$) | Distance $D_1$ (mm) | $V_a/(V_{total} - V_a)$ |
| Example 1 | 1/4 to 3/4 of length of positive electrode plate | 300 | 50 | 1 | 0.03 |
| Example 2 | 1/4 to 3/4 of length of positive electrode plate | 300 | 50 | 0.8 | 0.1 |
| Example 3 | 1/4 to 3/4 of length of positive electrode plate | 500 | 50 | 0.8 | 0.5 |
| Example 4 | 1/4 to 3/4 of length of positive electrode plate | 500 | 100 | 0.8 | 1 |
| Example 5 | 1/4 to 3/4 of length of positive electrode plate | 500 | 100 | 1 | 1.2 |

The preparation methods of the sodium-ion batteries in Examples 6 to 10 are the same as that in Example 1, except that the positive electrode plate has no grooves and the separator is provided with the second groove on both sides. Table 2 lists related parameters of the second groove.

Table 2

| | Second groove | | | | |
|---|---|---|---|---|---|
| | Arrangement position | Area $B_2$ ($\mu m^2$) | Depth $H_2$ ($\mu m$) | Distance $D_2$ ($\mu m$) | $V_a/(V_{total} - V_a)$ |
| Example 6 | 1/4 to 3/4 of length of separator | 12 | 2 | 10 | 0.03 |
| Example 7 | 1/4 to 3/4 of length of separator | 20 | 2 | 10 | 0.1 |

(continued)

| | Second groove | | | | |
|---|---|---|---|---|---|
| | Arrangement position | Area $B_2$ ($\mu m^2$) | Depth $H_2$ ($\mu m$) | Distance $D_2$ ($\mu m$) | $V_a/(V_{total} - V_a)$ |
| Example 8 | 1/4 to 3/4 of length of separator | 100 | 2 | 10 | 0.5 |
| Example 9 | 1/4 to 3/4 of length of separator | 100 | 5 | 10 | 1 |
| Example 10 | 1/4 to 3/4 of length of separator | 100 | 5 | 8 | 1.2 |

The preparation methods of the sodium-ion batteries in Examples 11 to 15 are the same as that in Example 1, except that the positive electrode plate has no grooves and the negative electrode plate is provided with the third groove on both sides. Table 3 lists related parameters of the third groove.

**Table 3**

| | Third groove | | | | |
|---|---|---|---|---|---|
| | Arrangement position | Area $B_3$ ($\mu m^2$) | Depth $H_3$ ($\mu m$) | Distance $D_3$ (mm) | $V_a/(V_{total} - V_a)$ |
| Example 11 | 1/4 to 3/4 of length of negative electrode plate | 100 | 50 | 2 | 0.03 |
| Example 12 | 1/4 to 3/4 of length of negative electrode plate | 150 | 50 | 2 | 0.1 |
| Example 13 | 1/4 to 3/4 of length of negative electrode plate | 150 | 100 | 2 | 0.5 |
| Example 14 | 1/4 to 3/4 of length of negative electrode plate | 150 | 100 | 1 | 1 |
| Example 15 | 1/4 to 3/4 of length of negative electrode plate | 150 | 100 | 0.5 | 1.2 |

The preparation methods of the sodium-ion batteries in Examples 16 to 20 are the same as that in Example 1, except that the positive electrode plate has no grooves, the negative electrode current collector is used as the negative electrode plate, and the negative electrode current collector is provided with the fourth grooves opposite each other on two sides without penetrating the two sides. Table 4 lists related parameters of the fourth groove.

**Table 4**

| | Fourth groove | | | | |
|---|---|---|---|---|---|
| | Arrangement position | Area $B_4$ ($\mu m^2$) | Depth $H_4$ ($\mu m$) | Distance $D_4$ ($\mu m$) | $V_a/(V_{total} - V_a)$ |
| Example 16 | 1/4 to 3/4 of length of negative electrode current collector | 100 | 2 | 40 | 0.03 |
| Example 17 | 1/4 to 3/4 of length of negative electrode plate | 150 | 2 | 40 | 0.1 |
| Example 18 | 1/4 to 3/4 of length of negative electrode plate | 150 | 5 | 40 | 0.5 |
| Example 19 | 1/4 to 3/4 of length of negative electrode plate | 150 | 5 | 20 | 1 |
| Example 20 | 1/4 to 3/4 of length of negative electrode plate | 150 | 5 | 10 | 1.2 |

The preparation method of the sodium-ion battery in Comparative example is the same as that in Example 1, except that the positive electrode plate has no grooves.

II. Battery performance test

Battery cycle life: The number of cycles when the battery capacity retention rate decays to 80%. Taking the battery of Example 1 as an example, the battery capacity retention rate test process was as follows: The battery was charged at 0.33C to a cut-off voltage of 4.35 V, constantvoltage charged at the cut-off voltage of 4.35 V to a current of 0.05C, and discharged at 0.33C to a cut-off voltage of 2.8 V, and the discharge capacity of the first cycle was recorded. Then n charge and discharge cycles were performed, and the discharge capacity of the n-th cycle was recorded. Cycling capacity retention rate = (discharge capacity of the n-th cycle/discharge capacity of the first cycle) $\times$ 100%.

The performance test results of the sodium-ion batteries in Examples 1 to 20 and Comparative example are shown in Table 5.

**Table 5**

|  | Battery cycle life (capacity retention rate 80%) (cycle) |
|---|---|
| Example 1 | 400 |
| Example 2 | 500 |
| Example 3 | 600 |
| Example 4 | 800 |
| Example 5 | 1,000 |
| Example 6 | 550 |
| Example 7 | 650 |
| Example 8 | 1,000 |
| Example 9 | 1500 |
| Example 10 | 2,000 |
| Example 11 | 450 |
| Example 12 | 850 |
| Example 13 | 1100 |
| Example 14 | 750 |
| Example 15 | 400 |
| Example 16 | 500 |
| Example 17 | 1,000 |
| Example 18 | 1200 |
| Example 19 | 900 |
| Example 20 | 700 |
| Comparative example | 380 |

The electrode assemblies of the sodium-ion batteries in Examples 1 to 20 are provided with grooves, while the electrode assembly of the sodium-ion battery in Comparative example is not provided with grooves. From the data in Table 5, it can be seen that the cycle life of the sodium-ion batteries in Examples 1 to 20 is significantly better than that in Comparative example, indicating that the solution of providing the groove in the electrode assembly of this application can reduce battery capacity loss and improve battery safety performance compared to the electrode assembly of the prior art.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of the claims and specification of this application. In particular, as long as there is no structural conflict, the various technical features mentioned in the implementations can be combined in any manners. This application is not limited to the specific embodiments disclosed in this specification but includes all technical solutions falling within the scope of the claims.

## Claims

1. An electrode assembly, wherein the electrode assembly comprises a positive electrode plate, a separation member, and a negative electrode plate, the separation member is disposed between the positive electrode plate and the negative electrode plate, and at least one of the positive electrode plate, the negative electrode plate, and the separation member is provided with a groove on a surface.

2. The electrode assembly according to claim 1, wherein a total volume $V_a$ of the groove and a total volume $V_{total}$ of the electrode assembly satisfy a relationship:

$$0.03 \leq \frac{V_a}{V_{tatol} - V_a} \leq 1.2.$$

3. The electrode assembly according to claim 1 or 2, wherein:

   the positive electrode plate comprises a positive electrode current collector and a positive electrode active substance layer, the positive electrode active substance layer is disposed on at least one side of the positive electrode current collector, and the positive electrode active substance layer is provided with a first groove on a surface; and/or
   the separation member is provided with a second groove on a surface; and/or
   the negative electrode plate comprises a negative electrode current collector and a negative electrode active substance layer, the negative electrode active substance layer is disposed on at least one side of the negative electrode current collector, and the negative electrode active substance layer is provided with a third groove on a surface.

4. The electrode assembly according to claim 3, wherein the first groove satisfies at least one of the following conditions:

   the first groove is located in a region of 1/4 to 3/4 of a length of the positive electrode plate;
   an area of a single first groove is $B_1$, wherein 300 $\mu m^2 \leq B_1 \leq 1$ cm$^2$;
   a depth of a single first groove is $H_1$, wherein 10 $\mu m \leq H_1 \leq 100$ $\mu m$; and
   a distance between two adjacent first grooves is $D_1$, wherein 0.5 mm $\leq D_1 \leq 10$ mm.

5. The electrode assembly according to claim 3, wherein the second groove satisfies at least one of the following conditions:

   the second groove is located in a region of 1/4 to 3/4 of a length of the separation member;
   an area of a single second groove is $B_2$, wherein 10 $\mu m^2 \leq B_2 \leq 1000$ $\mu m^2$;
   a depth of a single second groove is $H_2$, wherein 1 $\mu m \leq H_2 \leq 30$ $\mu m$; and
   a distance between two adjacent second grooves is $D_2$, wherein 5 $\mu m \leq D_2 \leq 100$ $\mu m$.

6. The electrode assembly according to claim 3, wherein the third groove satisfies at least one of the following conditions:

   the third groove is located in a region of 1/4 to 3/4 of a length of the negative electrode plate;
   an area of a single third groove is $B_3$, wherein 50 $\mu m^2 \leq B_3 \leq 1$ mm$^2$;
   a depth of a single third groove is $H_3$, wherein 1 $\mu m \leq H_3 \leq 200$ $\mu m$; and
   a distance between two adjacent third grooves is $D_3$, wherein 0.5 mm $\leq D_3 \leq 10$ mm.

7. The electrode assembly according to any one of claims 1 to 6, wherein a surface of at least one of the positive electrode plate, the separation member, and the negative electrode plate is arranged as a rough surface.

8. The electrode assembly according to claim 7, wherein a roughness $R_1$ of the rough surface of the negative electrode plate satisfies Ra0.2 $\leq R_1 \leq$ Ra25; and/or

   a roughness $R_2$ of the rough surface of the positive electrode plate satisfies Ra0.1 $\leq R_2 \leq$ Ra50; and/or
   a roughness $R_3$ of the rough surface of the separation member satisfies $R_3 \geq$ Ra12.5.

9. The electrode assembly according to any one of claims 1 to 8, wherein an elastic modulus of the separation member is 200 MPa-8000 MPa.

10. The electrode assembly according to any one of claims 1 to 8, wherein the separation member comprises a first separator, a middle separator, and a second separator stacked along a thickness direction of the separation member, and a thickness of the middle separator is not less than a thickness of the first separator or the second separator.

11. The electrode assembly according to claim 10, wherein a pore size of the middle separator is larger than a pore size of the first separator or the second separator; and/or a porosity of the middle separator is larger than a porosity of the first separator or the second separator.

12. The electrode assembly according to claim 11, wherein the first separator, the middle separator, and the second separator satisfy at least one of the following conditions:

   the pore size of the first separator is 20 nm-50 nm;
   the porosity of the first separator is 30%-70%;
   the pore size of the middle separator is 30 nm-100 nm;
   the porosity of the middle separator is 40%-90%;
   the pore size of the second separator is 20 nm-50 nm; and
   the porosity of the second separator is 30%-70%.

13. The electrode assembly according to any one of claims 1 to 12, wherein the negative electrode plate comprises a negative electrode current collector, and the negative electrode current collector is provided with a fourth groove on a surface.

14. The electrode assembly according to claim 13, wherein the fourth groove satisfies at least one of the following conditions:

   the fourth groove is located in a region of 1/4 to 3/4 of a length of the negative electrode current collector;
   an area of a single fourth groove is $B_4$, wherein 70 $\mu m^2 \leq B_4 \leq 2$ $mm^2$, preferably 300 $\mu m^2 \leq B_4 \leq 1$ $mm^2$;
   a depth of a single fourth groove is $H_4$, wherein 1 $\mu m \leq H_4 \leq 20$ $\mu m$; and
   a distance between two adjacent fourth grooves is $D_4$, wherein 0.01 mm$\leq D_4 \leq 10$ mm, preferably 0.5 mm$\leq D_4 \leq 2$ mm.

15. The electrode assembly according to claim 13 or 14, wherein the fourth groove extends through the negative electrode current collector.

16. The electrode assembly according to any one of claims 13 to 15, wherein the negative electrode current collector is provided with the fourth groove on both sides.

17. The electrode assembly according to claim 16, wherein the fourth grooves on two sides of the negative electrode current collector are staggered.

18. The electrode assembly according to any one of claims 13 to 17, wherein a ratio of a depth of a single fourth groove to a thickness of the negative electrode current collector is 0.05-0.7, preferably 0.05-0.5, and more preferably 0.05-0.3.

19. The electrode assembly according to any one of claims 16 to 18, wherein the fourth grooves on two sides of the negative electrode current collector are arranged opposite each other.

20. The electrode assembly according to any one of claims 13 to 19, wherein the ratio of the depth of a single fourth groove to the thickness of the negative electrode current collector is 0.05-0.4.

21. The electrode assembly according to any one of claims 13 to 20, wherein a protrusion is formed on a surface of the negative electrode current collector.

22. The electrode assembly according to claim 21, wherein the fourth groove is formed on one side of the negative electrode current collector, and the protrusion is formed at a position corresponding to the fourth groove on the other side of the negative electrode current collector.

23. The electrode assembly according to any one of claims 13 to 20, wherein the negative electrode current collector is formed with the protrusion and the fourth groove on both sides, and the fourth groove and the protrusion are alternately arranged on the same side of the negative electrode current collector.

24. The electrode assembly according to claim 23, wherein the fourth groove on one side of the negative electrode current collector is arranged opposite the protrusion on the other side of the negative electrode current collector.

25. The electrode assembly according to any one of claims 21 to 24, wherein a height of the protrusion is 1 $\mu$m-20 $\mu$m.

26. The electrode assembly according to any one of claims 13 to 25, wherein a coverage rate of the fourth groove on a single side of the negative electrode current collector is 10%-70%.

27. The electrode assembly according to any one of claims 13 to 26, wherein when a tensile strain of the negative electrode current collector is 1.5%, a sheet resistance growth rate T of the negative electrode current collector is ≤5%, preferably T≤2.5%.

28. The electrode assembly according to any one of claims 13 to 27, wherein the fourth groove is provided with metallic dendrites.

29. A battery, comprising the electrode assembly according to any one of claims 1 to 28.

30. An electric apparatus, comprising the battery according to claim 29, wherein the battery is configured to supply electric energy.

1000

200

100

10

300

FIG. 1

100

11

101

12

12

FIG. 2

200

FIG. 3

200

FIG. 4

300

31

301

32

32

FIG. 5

300

31

302

FIG. 6

31

302

FIG. 7

FIG. 8

FIG. 9

FIG. 10

31

302

303

FIG. 11

1

FIG. 12

2

1 1 1 1

FIG. 13

3

FIG. 14

FIG. 15

FIG. 16

## INTERNATIONAL SEARCH REPORT

| International application No. |
|---|
| **PCT/CN2023/116626** |

### A. CLASSIFICATION OF SUBJECT MATTER

H01M4/13(2010.01)i; H01M4/70(2006.01)i

According to International Patent Classification (IPC) or to both national classification and IPC

### B. FIELDS SEARCHED

Minimum documentation searched (classification system followed by classification symbols)

H01M4/-

Documentation searched other than minimum documentation to the extent that such documents are included in the fields searched

Electronic data base consulted during the international search (name of data base and, where practicable, search terms used)

CNABS, CNTXT, ENTXTC, WPABSC, ENTXT, CNKI: 凹槽, 电池, 电极, 负极片, 隔离, 隔离件, 开槽, 正极, 正极片, battery, positive, negative, separator, recess, groove?

### C. DOCUMENTS CONSIDERED TO BE RELEVANT

| Category* | Citation of document, with indication, where appropriate, of the relevant passages | Relevant to claim No. |
|---|---|---|
| X | WO 2022257746 A1 (ZHUHAI COSMX BATTERY CO., LTD.) 15 December 2022 (2022-12-15) <br> description, embodiment 1 | 1-30 |
| X | CN 201087907 Y (SHENZHEN B&K TECHNOLOGY CO., LTD.) 16 July 2008 (2008-07-16) <br> description, embodiments | 1-30 |
| X | CN 104124428 A (NINGBO XINGRUI ENERGY TECHNOLOGY CO., LTD.) 29 October 2014 (2014-10-29) <br> description, embodiment 1 | 1-12, 29-30 |
| X | CN 209515859 U (SHENZHEN WATER POWER ENVIRONMENTAL PROTECTION NEW ENERGY CO., LTD.) 18 October 2019 (2019-10-18) <br> specific embodiments | 1-12, 29-30 |
| X | CN 101453008 A (BYD CO., LTD.) 10 June 2009 (2009-06-10) <br> description, embodiment 1 | 1-3, 7-12, 29-30 |
| PX | CN 219180703 U (BYD CO., LTD.) 13 June 2023 (2023-06-13) <br> description, paragraphs 0045-0046 | 1, 13, 29-30 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 November 2023** | **29 November 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/116626** |

### C.     DOCUMENTS CONSIDERED TO BE RELEVANT

| Category* | Citation of document, with indication, where appropriate, of the relevant passages | Relevant to claim No. |
|---|---|---|
| A | CN 112186137 A (LEXEL BATTERY (SHENZHEN) CO., LTD.) 05 January 2021 (2021-01-05)<br>        abstract | 1-30 |
| A | CN 205900682 U (TIANJIN LISHEN BATTERY JOINT-STOCK CO., LTD.) 18 January 2017 (2017-01-18)<br>        abstract | 1-30 |

Form PCT/ISA/210 (second sheet) (July 2022)

**INTERNATIONAL SEARCH REPORT**
Information on patent family members

International application No.

**PCT/CN2023/116626**

| Patent document cited in search report | | | Publication date (day/month/year) | Patent family member(s) | | | Publication date (day/month/year) |
|---|---|---|---|---|---|---|---|
| WO | 2022257746 | A1 | 15 December 2022 | CN | 113381058 | A | 10 September 2021 |
| CN | 201087907 | Y | 16 July 2008 | None | | | |
| CN | 104124428 | A | 29 October 2014 | None | | | |
| CN | 209515859 | U | 18 October 2019 | None | | | |
| CN | 101453008 | A | 10 June 2009 | CN | 101453008 | B | 26 January 2011 |
| CN | 219180703 | U | 13 June 2023 | None | | | |
| CN | 112186137 | A | 05 January 2021 | CN | 202022070845 | U | 30 March 2020 |
| CN | 205900682 | U | 18 January 2017 | None | | | |

Form PCT/ISA/210 (patent family annex) (July 2022)